# EUROPEAN PATENT APPLICATION

(11) **EP 1 603 060 A2**
(43) Date of publication of application: **07.12.2005**
(21) Application number: 05253235.5
(22) Date of filing: 26.05.2005
(51) Int. Cl.: G06F 17/30

(54) **Method and apparatus for moving multi-media file and storage medium storing program for executing the method**

(30) Priority: 01.06.2004 KR 2004039625
(71) Applicant: SAMSUNG ELECTRONICS CO., LTD., Suwon-city, Gyeonggi-do (KR)
(72) Inventor: Kim, Du-il 108-1403 Dongsuwon LG Village, Suwon-si Gyeonggi-do (KR); Ahn, Jin-Yong, Suwon-si Gyeonggi-do (KR); Choi, Hyok-sung, Anyang-si Gyeonggi-do (KR); Shin, Seong-kook, Seonchho-gu Seoul (KR); Kim, Hee-yeon, Suwon-si Gyeonggi-do (KR); Kim, Young-yoon, Seocho-gu Seoul (KR)
(74) Representative: Brandon, Paul Laurence

(57) **Abstract**

Provided are a method and apparatus for moving a multi-media file using a Universal Unique IDentifier (UUID) of a capture device (100, 400), and a storage medium storing a program for executing the multi-media file moving metlaod. The multi-media file moving method includes the operations of receiving unique identifier information about the device from the device, checking whether a directory having a name based on the unique identifier information exists in the storage device, generating the directory based on the unique identifier information if the directory does not exist in the storage device, and storing the multi-media file received from the device in the directory. Accordingly, a media file a user desires can be easily searched.

## Description

The present invention relates to multi-media file movement, and more particularly, to methods and apparatus for moving a multi-media file stored in a capture device to a storage device, and to storage media storing a program for executing the multi-media file moving methods.

Recently, it has become popular to capture media such as digital still images, video, digital audio and text using digital audio reproducing apparatuses supporting a digital camera, a digital camcorder, an MP3 file that is an MPEG audio file and a WMA file that is a Microsoft Window Media Audio file. A capture device capturing the media provides the captured media to a storage device or a multi-media reproduction system such that a user can enjoy the media. The storage device or multi-media reproduction system has a storage medium such as a HDD, DVD, CD or other memory. The storage device and multi-media reproduction system belong to a consumer electronics product group that supports personal computers, media servers, DVD drivers, CD drivers and TV.

When the storage device or multi-media reproduction system receives the media from the capture device, the storage device or multi-media reproduction system stores the received media in a storage medium such as a CD, DVD, HDD or a memory and searches the storage medium for media a user desires to provide the searched media to the user.

The storage device or multi-media reproduction system stores the received media in an empty space of the storage medium or stores the media in a directory designated by a user using a file system. Thus, the user must search the entire space of the storage medium for the desired media or know the name of the directory designated when the media are stored in order to be provided with the desired media.

Furthermore, the user can set a desired directory structure when the storage device of a multi-media reproduction system is a device to which information is easily input, such as a personal computer. However, in the case of a TV, DVD player or CD player, the user has difficulty in setting a directory structure because it is not easy to input information for setting the directory to the TV, DVD player or CD player.

Preferred embodiments of the present invention aim to provide a method and apparatus for moving a multi-media file stored in a capture device to a storage device using a. universal unique identifier (UUID) of the capture device and a storage medium storing a program for executing the multi-media file moving method.

Preferred embodiments of the present invention also aim to provide a method and apparatus for moving a multi-media file stored in a capture device to a storage device based on a UUID and device class of the capture device and a storage medium storing a program for executing the multi-media file moving method.

According to an aspect of the present invention, there is provided a method of moving a multi-media file from a device having the multi-media file to a storage device, the method including: receiving unique identifier information about the device from the device; checking whether a directory having a name based on the unique identifier information exists in the storage device; generating the directory based on the unique identifier information if the directory does not exist in the storage device; and storing the multa-media file received from the device in the directory.

According to another aspect of the present invention, there is provided a method of moving a multi-media file from a device storing the multi-media file to a storage device, the method including transmitting information based on unique identifier information about the device to the storage device when the device receives a request for the unique identifier information about the device, and transmitting a media file to the storage device when the device receives a request for the media file.

According to another aspect of the present invention, there is provided a method of moving a media file from a device storing the media file and an album file according to the MPV (MusicPhotoVideo) standard to a storage device, the method including: receiving the album file from the device; checking whether a directory having a name based on the unique identifier information about the device, the unique identifier information obtained by parsing the album file, exists in the storage device; generating the directory based on the unique identifier information if the directory docs not exist in the storage device; and storing the media file and the album file received from the device in the directory.

According to another aspect of the present invention, there is provided a method of moving a media file from a device storing the media file and an album file according to the MPV (MusicPhotoVideo) standard to a storage device, the method including: reading the media file and the album file corresponding to the media file from the device when the device receives a request for the media file; and transmitting the read-out media file and album file to the storage device.

According to another aspect of the present invention, there is provided an apparatus for moving a multi-media file from a device having the multimedia file to a storage device, the apparatus including: an interface receiving unique identifier information about the device and the multi-media file from the device; a file system managing at least one directory of the storage device and performing a write function for the multi-media file; and a multi-media file moving controller checking whether a directory having a name based on the unique identifier information received from the interface exists in the file system, and requesting the write function for the multi-media file from the file system if the directory exists in the file system.

According to another aspect of the present invention, there is provided an apparatus for moving a media file from a device storing the media file and an album file according to the MPV (MusicPhotoVideo) standard to a storage device, the apparatus including: an interface receiving the media file and the album file corresponding to the media file from the device; a file system managing at least one directory of the storage device and writing the multimedia file and the album file; and a media file moving controller checking whether a directory having a name based on the album file received from the interface exists in the file system, and requesting the file system to write the media file and the album file if the directory exists in the file system.

According to another aspect of the present invention, there is provided a computer readable storage medium storing a program for executing a method of moving a multi-media file from a device having the multi-media file to a storage device, the multimedia file moving method including: receiving unique identifier information about the device from the device; checking whether a directory having a name based on the unique identifier information exists in the storage device; generating the directory based on the unique identifier information if the directory does not exist in the storage device; and storing the multi-media file received from the device in the directory.

According to another aspect of the present invention, there is provided a computer readable storage medium storing a program for executing a method of moving a media file from a device storing the media file and an album file according to the MPV (MusicPhotoVideo) standard to a storage device, the media file moving method including: receiving the album file from the device; checking whether a directory having a name based on the unique identifier information about the device, the unique identifier information obtained by parsing the album file, exists in the storage device; generating the directory based on the unique identifier information if the directory does not exist in the storage device; and storing the media file and the album file received from the device in the directory.

The present invention will become more apparent by describing in detail exemplary embodiments thereof with reference to the attached drawings in which:

FIG. 1 is block diagram of a system including a multi-media file moving apparatus according to an embodiment of the present invention;

FIG. 2 illustrates a directory structure of a file system according to an embodiment of the present invention;

FIG. 3 is a flow chart showing a multi-media file moving method according to an embodiment of the present invention;

FIG. 4 is a block diagram of a system including a multi-media file moving apparatus according to another embodiment of the present invention;

FIG. 5 illustrates an album file according to an embodiment of the present invention;

FIG. 6 illustrates an album file according to another embodiment of the present invention;

FIG. 7 illustrates a directory structure generated in a file system according to the present invention; and

FIG. 8 is a flow chart showing a multi-media file moving method according to another embodiment of the present invention.

The present invention will now be described more fully with reference to the accompanying drawings, in which exemplary embodiments of the invention are shown. The invention may, however, be embodied in many different forms and should not be construed as being limited to the embodiments set forth herein; rather, these embodiments are provided so that this disclosure will be thorough and complete, and will fully convey the concept of the invention to those skilled in the art. Throughout the drawings, like reference numerals refer to like elements.

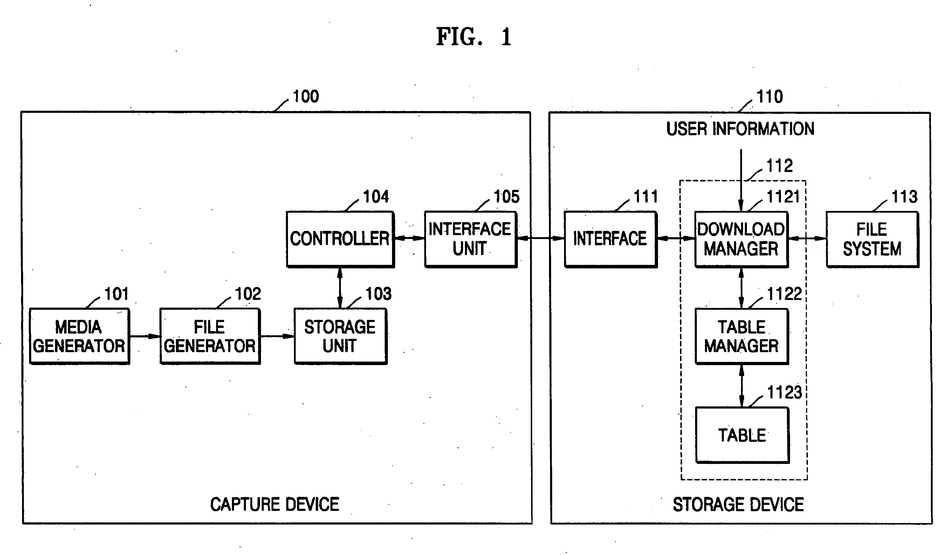

FIG. 1 is block diagram of a system including a multi-media file moving apparatus according to an embodiment of the present invention. The system includes a capture device 100 and a storage device 110. The capture device 100 may be, for example, a digital camera for capturing digital images, a digital camcorder for capturing video clips, a device for capturing MP3 files or window media audio (WMA) files, or a device for capturing information such as text.

Referring to FIG. 1, the capture device 100 includes a media generator 101, a file generator 102, a storage unit 103, a controller 104, and an interface 105. The media generator 101 generates captured media. For example, the media generator 101 generates a captured digital image when the capture device 100 is a digital camera and generates a captured video clip when the capture device 100 is a digital camcorder. Further examples are that the media generator 101 generates MP3 data when the capture device 100 is an MP3 player and generates text data when the capture device 100 is a personal computer.

The file generator 102 generates a media file having an extension based on the kind of the media generated by the media generator 101. For example, the file generator 102 generates a JPG file when the media generator 101 generates a digital image and generates a video clip file when the media generator 101 generates a video clip. Furthermore, the file generator 1.02 generates an MP3 file when the media generator 101 generates MP3 data.

The storage unit 103 stores at least one media file generated by the file generator 102. In addition, the storage unit 103 can store UUID information and device class information of the capture device 100. The UUID information is unique identification information about the capture device 100. The UUID information can be set by a capture device vendor. The UUID information can be defined by 128 bits.

The device class is information about the kind of the capture device 100. When the capture device 100 is a digital still cam.era, the device class can be defined as 'DSC'. When the capture device 100 is a digital video camcorder, the device class can be defined as 'DVC'. When the capture device 100 is a PC device, the device class can be defined as 'PCD'. When the capture device 100 is a mobile phone device, the device class can be defined as 'MPD'. When the capture device 100 is an MP3 player, the device class can be defined as 'MPP'. The capture device vendor designates the device class.

The storage unit 103 can use, for example, a memory, a memory stick, an optical disc or a hard disc as a storage medium.

When the UUID information and device class information are stored in the storage unit 103 and the storage device 110 requests the controller 104 to transmit the UUID information through the interface 105, the controller 104 reads the UUID information and device class information stored in the storage unit 103 and provides the read UUID information and device class information to the storage device 110 through the interface 105.

When the storage device 110 requests the controller 104 to transmit the media file through the interface 1.05, the controller 104 reads the media file from the storage unit 103 and transmits the read media file to the storage device 110 through the interface 105.

The interface 105 transmits the UUID information, device class information and media file from the capture device 100 to the storage device 110 based on a mode of connection between the capture device 100 and the storage device 110. In addition, the interface 105 provides a request signal received from the storage device 110 to the controller 104. When the capture device 100 and the storage device 110 are connected to each other using a universal serial bus (USB) cable, for example, the interface 105 transmits/receives the UUID information, device class information, media file and request signal between the capture device 100 and the storage device 110 according to a USB protocol.

The storage device 110 can be a portable storage device or a multimedia reproduction device having storage and reproduction functions, such as a DVD driver, CD driver or personal computer, The storage device 110 includes an interface 111, a media file moving controller 112 and a file system 113.

The interface 111 transmits a UUID information request signal or media file request signal from the storage device 110 to the capture device based on the mode of connection between the storage device 110 and capture device 100 and receives the UUID information, device class information and media file transmitted from the capture device 100. When the capture device 100 and the storage device 110 are connected to each other using a USB cable, the interface 111 can transmit the information or signal based on USB protocol.

The media file moving controller 112 includes a download manager 1121, a table manager 1122, and a table 1123. The download manager 1121 transmits the UUID information request signal to the capture device 100 through the interface 111 when the download manager 1121 recognizes that capture device is connected to the storage device, the user requires the UUID information of the capture device 100, or the user requests the media file stored in the capture device 100 to be stored. When the UUID information and device class information are received through the interface 111, the download manager 1121 provides the received UUID information to the table manager 1122.

When the UUID information is received, the table manager 1122 checks whether the UUID information exists in the table 1123. When the UUID information exists in the table 1123, the table manager 1122 reads translated UUID information corresponding to the UUID information from the table 1123. Thus, the table manager 1122 can be called a UUID table manager. The table 1123 can be called a UUID table.

The table 1123 maps UUIDs of capture devices and translated UUIDs. Accordingly, the table 1123 can provide the translated UUID corresponding to the UUID of the capture device 100. The UUID information may have 128 bits and the translated UUID information stored in the table 1123 may include 5 characters or 3 characters. When the translated UUID information has 5 characters, the translated UUID information can be represented by a number between "00001" through "99999". When the translated UUID information has 3 characters, it can be represented by a number between "001" through "999", The translated UUID information stored in the table 1123 is information obtained by translating the UUID information of an available capture device according to a predetermined rule.

When the UUID information docs not exist in the table 1123, the table manager 1122 recognizes that there is no UUID information corresponding to the currently received UUID information in the table 1123. Accordingly, the table manager 1122 generates translated UUID information corresponding to the currently received UUID information. The table manager 1122 can generate the translated UUID information based on the translated UUID information stored in the table 1123.

When the translated UUID information stored in the table 1123 has 5 characters, for example, the table manager 1122 can generate a character, which is larger than the last translated UUID information stored in the table 1123 by 1, as the translated UUID information corresponding to the currently received UUID information. Specifically, when the last translated. UUID information is '00004', the table manager 1122 can generate '00005' as the translated UUID information corresponding to the currently received UUID information. Otherwise, the table manager 1122 can randomly select one of information items that can be set as translated UUID information items, except the translated UUID information stored in the table 1123, to generate the translated UUID information corresponding to the currently received UUID information.

When the translated UUID information is generated, the table manager 1122 updates the table 1123 such that information obtained by mapping the currently received UUID information and the generated translated UUID information is stored in the table 1123.

The table manager 1122 provides the translated UUID information read from the table 1123 or the newly generated translated UUID information to the download manager 1121. Then, the download manager 1121 combines the translated UUID information provided by the UUID table manager 1122 with the device class received from the interface 111 to generate a directory name about the capture device 100.

The download manager 1121 checks whether a directory having the generated directory name exists in the file system 113. If the directory having the directory name exists in the file system 113, the download manager 1121 does not request the file system 113 to generate the directory having the generated directory name. When the directory having the directory name does not exist in the file system 113, the download manager 1121 requests the file system 113 to generate the directory having the generated directory name.

When the user requests the media file stored in the capture device 100 to be stored, the download manager 1121 requests the capture device 100 to transmit the media file through the interface 111. When the media file is transmitted to the download manager 1121, the download manager 1121 sends a write function request to the file system 113 such that the media file is recorded in the directory having the generated directory name.

While the aforementioned example has described that the request for the UUID information and the request for storing the media file arc respectively generated, the UUID information and the media file to be stored can be received together through the request for storing the media file. If the UUTD information and the media file are received together, the download manager 1121 transmits the write function request to the file system 113 such that the media file received with the UUID information is stored in the corresponding directory when the directory exists in the file system 113.

When the download manager 1121 requests the file system 113 to generate a directory having an arbitrary name, the file system 113 generates the directory. When the file system receives the write function request for an arbitrary media file from the download manager 1121, the file system locates the name of the media file at a lower level of the directory having the directory name included in the received write function request to write the media file.

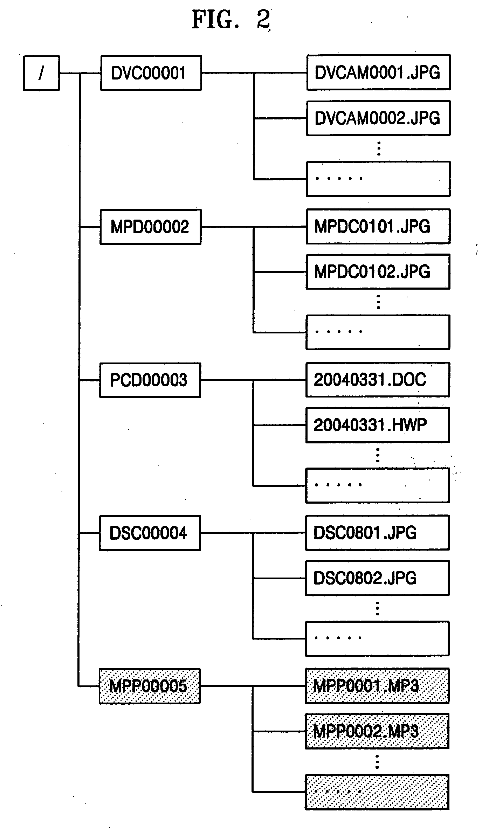

For example, when the file system 113 includes directories having directory names 'DVC00001', 'DVC00002', 'PCD00003', and 'DSC00004' and the download manager 1121 requests the file system 113 to generate a directory having the name of 'MPP00005', as shown in FIG. 2, the file system 113 generates the directory 'MPP00005'. This means that the name of the directory corresponding to the capture device 100 is 'MPP00005'. Accordingly, the file system 113 carries out the write function such that media files (MPP00001.MP3, MPP00002.MP3, ....) downloaded from the capture device 100 by the download manager 1121 is stored in the directory 'MPP00005'.

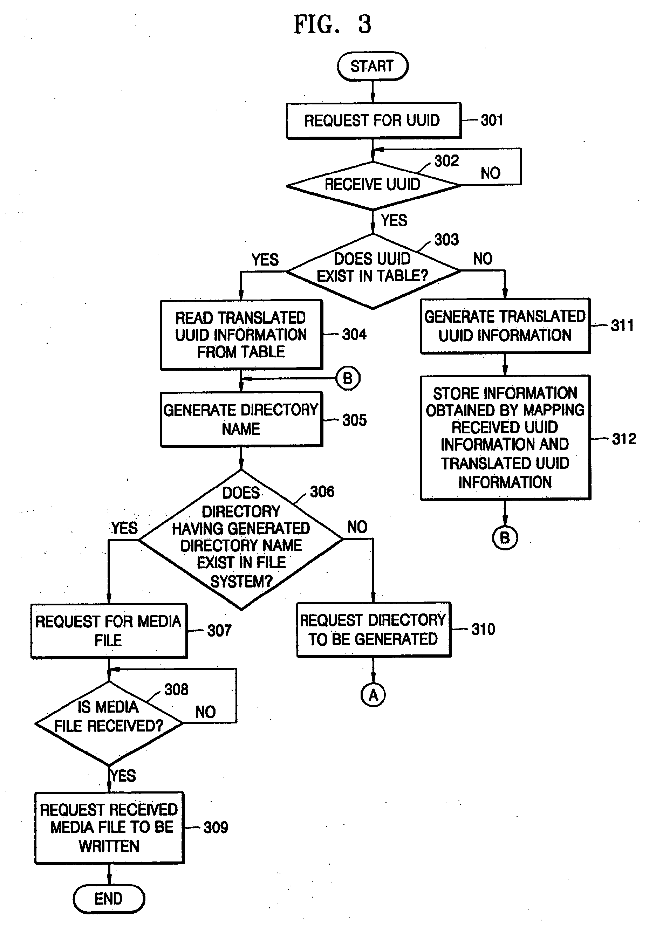

FIG. 3 is a flow chart showing a multi-media file moving method according to an embodiment of the present invention.

Referring to FIG. 3, the storage device 110 requests the capture device 100 to transmit UUID information at the user's request or when the connection of the capture device 1.00 and storage device 110 is recognized in the step 301. When the UUID information is received from the capture device 100 in the step 302, the table manager 1122 of the storage device 110 checks whether the received UUID information exists in the table 1123 in the step 303. When the UUID information exists in the table 1123, the table manager 1122 reads translated UUID information from the table 1123 in the step 304. The download manager 1121 combines the translated UUID information provided by the table manager 1122 and device class information received at the same time when the UUID information is received to generate a directory name about the capture device 100 in the step 305,

The directory name can be generated by combining the translated UUID information, the received device class information and identification information about the vendor or manufacturer of the capture device 100. The device class information and the identification information about the vendor or manufacturer of the capture device 100 are defined by upper-case alphanumeric characters, but could be defined by lower-case alphanumeric characters or a combination of upper-case and lower-case alphanumeric characters. The identification information about the vendor or manufacturer of the capture device 100 could also be defined by free characters.

The download manager 1121 checks whether a director having the generated directory name exists in the file system 113 in the step 306. When the directory having the generated file name exists in the file system 113, the download manager 1121 requests the capture device 100 to transmit a media file required to be stored in the step 307. When the media file is received from the capture device 100 in the step 308, the download manager 1121 sends a write function request for the received media file to the file system 113 in the step 309. Accordingly, the write function is executed such that the media file received in the step 308 is stored in the directory having the directory name generated in the step 305.

When the directory having the generated directory name does not exist in the file system 113 in the step 306, the download manager 1121 requests the file system 113 to generate a directory having the generated directory name in the step 310. Then, the file system 113 generates the directory having the name.

When it is judged that the UUID information does not exist in the table 1123 in the step 303, translated UUID information corresponding to the UUID information received by the table manager 1122 is generated in the step 311. The translated UUID information is information obtained by translating UUID information of available capture devices according to a predetermined rule. The table manager 1121 stores information obtained by mapping the received UUID information and the translated UUID information in the table 1123 in the step 312.

Subsequently, the download manager 1121 combines the translated UUID information generated in the step 311 and the device class information received from the capture device 1.00 to generate a directory name or combines the generated translated UUID information, the received device class information and the identification information about the vendor or manufacturer of the capture device 100 to generate the directory name in the step 306, and then carries out the above-described following steps.

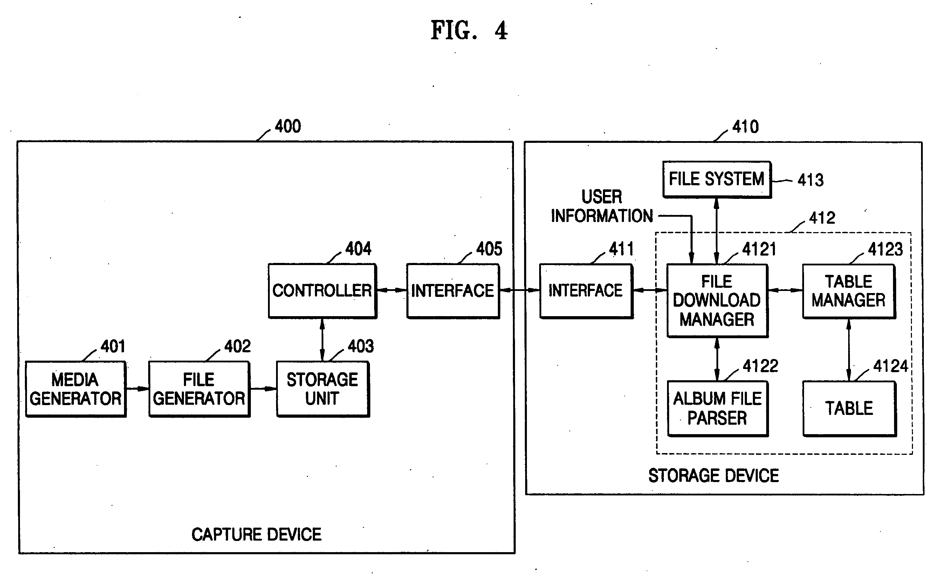

FIG. 4 is a block diagram of a system including a multi-media file moving apparatus according to another embodiment of the present invention. The system includes a capture device 400 and a storage device 410. The capture device 400 can transmit a media file or attribute da.ta (or an album file) to the storage device 410 according to MPV (Music Photo Video or Multi Photo Video) standard.

The capture device 400 captures digital images, video clips, MP3 audio files, WMA files or texts and generates an album file corresponding to the captured media according to the MPV standard based on the function thereof.

Referring to FIG. 4, the capture device 400 includes a media generator 401, a file generator 402, a storage unit 403, a controller 404, and an interface 405. The media generator 401 generates captured media. That is, the media generator 401 generates a captured digital image when the capture device 400 is a digital camera and generates a captured video clip when the capture device 400 is a digital camcorder. Furthermore, the media generator 401 generates MP3 data when the capture device 400 is an MP3 player and generates text data when the capture device 400 is a personal computer.

The file generator 402 generates a media file having an extension based on the kind of the media generated by the media generator 401 and an album file corresponding to the media file. That is, the file generator 402 can generate a JPG file when the media generator 401 generates a digital image and can generate a video clip file when the media generator 401 generates a video clip. Furthermore, the file generator 402 can generate an MP3 file when the media generator 401 generates MP3 data.

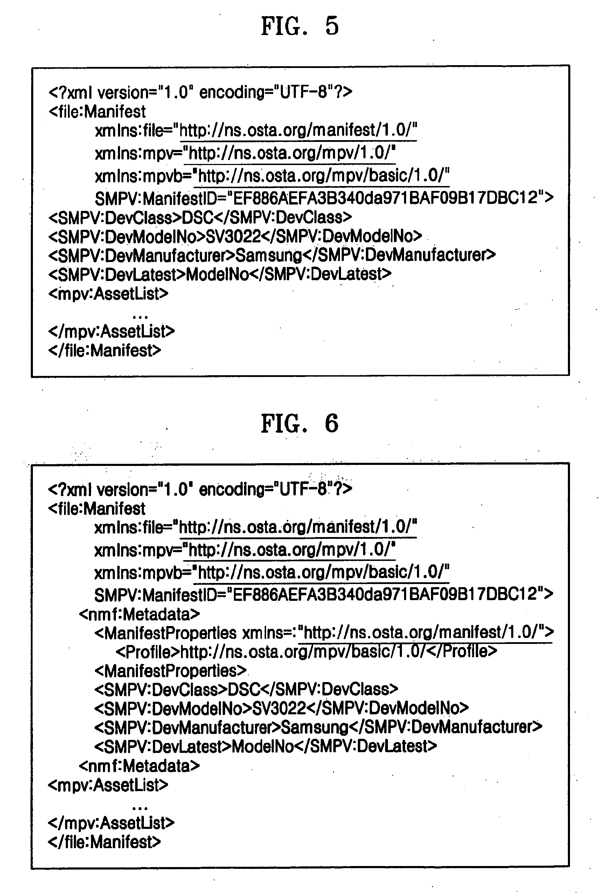

The album file is an index file of the generated media file. FIG. 5 illustrates an album file according to an embodiment of the present invention. Referring to FIG. 5, the album file includes elements such as a manifest ID ManifestID, a device class DevClass, a device model number DevModelNo, a device manufacturer DevManufacture and a latest device model number DcvLatest at Manifest lower level. The ManifestID is attribute data and corresponds to the UUID of the capture device 400. In FIG. 5, the ManifestID is defined as "EF886AEFA3B340da971BAF09B17DBC12" using 128 bits. The DevClass, DevModclNo, DevManufacture and DevLatest correspond to metadata of Manifest.

The device class is information representing the kind of the capture devi.ce 400. The device class is defined by 3 upper-case alphanumeric characters. For instance, when the capture device 400 is a digital still camera, the device class can be defined as 'DSC'. When the capture device 400 is a digital video camcorder, the device class can be defined as 'DVC'. When the capture device 400 is a PC device, the device class can be defined as 'PCD'. When the capture device 400 is a mobile phone device, the device class can be defined as 'MPD'. When the capture device 400 is an MP3 player, the device class can be defined as 'MPP'. The capture device vendor designates the device class. The device model number is the model number of the capture device 400. The latest device model number corresponds to the model number of a device through which the latest media file is copied when media files are copied through a plurality of devices.

Information such as the ManifestID, device class, device model number, device manufacturer and latest device model number is previously stored in the storage unit 403 or provided to the user of the capture device 400 when the album file is generated.

FIG. 6 illustrates an album file according to another embodiment of the present invention. While the ManifestID, device class, device model number, device manufacturer and latest device model number are defined as elements of the Manifest lower level in the case of the album file shown in FIG. 5, the ManifestID is defined as an element of the Manifest lower level and the device model number, device manufacturer and latest device model number are defined as elements of a metadata lower level in the case of the album file of FIG. 6.

The generated media file and the album file corresponding to the media file are stored in the storage unit 403. The storage unit 403 can use, for example, a memory, a memory stick, an optical disc or a hard disc as a storage medium.

When the media file and album file are stored in the storage unit 403 and the storage device 410 requests tlae controller 404 to transmit the album file or media file corresponding to the album file, the controller 404 provides the album file or media file corresponding to the album file stored in the storage unit 403 to the storage device 410 through the interface 405.

When die storage device 410 requests the controller 404 to transmit the album file through the interface 405, the controller 404 reads the album file from the storage unit 403 and transmits the read album file to the storage device 410 through the interface 405. When the storage device 410 requests the controller 404 to transmit the media file or the album file and media file through the interface 405, the controller 404 reads the media file or the album and media file from the storage unit 403 and transmits the read media file or the read album file and media file to the storage device 410 through the interface 405.

The interface 405 transmits the album file or media file from the capture device 400 to the storage device 410 based on MPV standard and receives a request signal or information transmitted from the storage device 410.

The storage device 410 can be a storage device having a storage medium such as a HDD or a multi-media reproduction system having storage and reproduction functions such as a personal computer. The storage device 410 includes an interface 411, a multi-media file moving controller 412 and a file system 413.

The interface 411 receives the album file or media file transmitted from the capture device 400 based on the MPV standard and transmits an album file request signal or a media file request signal from the storage device 410 to the capture device 400.

The multi-media file moving controller 412 includes a file download manager 4121, an album file parser 4122, a table manager 4123, and a table 4124. The file download manager 4121 transmits an album file request signal or an album file and media ble request signal to the capture device 400 through the interface 411 when the connection of the capture device 400 and the storage device 410 is recognized or the user requests the album file or the album file and media file stored in the capture device 400 to be stored or downloaded.

When the album file or the album file and media file are received from the capture device 400 through the interface 411, the file download manager 4121 provides the received album file or the received album file and media file to the album file parser 4122.

The album file parser 4122 analyzes the received album file to detect the metadata, such as the ManifestID, device class and so on, included in the album file. The album file parser 4122 provides the detected metadata to the file download manager 4121.

The file download manager 4121 provides the detected ManifestID to the table manager 4123. This is because the ManifestID corresponds to the UUID of the capture device 400. Accordingly, the table manager 4123 can be defined as a UUID table manager and the table 4124 can be defined as a UUID table. The table manager 4123 checks whether the ManifestID exists in the table 4124. When the ManifestID exists in the table 4124, the table manager 4123 reads translated UUID information about the ManifestID from the table 4124.

The table 4124 maps UUIDs (or ManifestIDs) of capture devices and translated UUIDs. The translated UUIDs are information items obtained by translating the UUIDs of the capture devices according to a predetermined rule. Thus, the table 4124 can provide "00004" as the translated UUID information when ManifestID "EF886AEFA3B340da971BAF09B17DBC12" and translated UUID information "00004" are mapped as shown Table 1.

**Table 1**

| SMPV:ManifestID | Translated UUID (Characters set) |
|---|---|
| EF886AEFA3B340da971BAF09B17DBC12 | 00004 |

The translated UUID information stored in the table 4124 can have 5 characters or 3 characters. When the translated UUID information has 5 characters, the translated UUID information can be represented by a number between "00001" through "99999". When the translated UUID information has 3 characters, the translated UUID information can be represented by a number between "001" through "999".

When the ManifestID does not exist in the table 4124, the table manager 4123 recognizes that the translated UUID information corresponding to the currently received ManifestID does not exist in the table 4124. Accordingly, the table manager 4123 generates the translated UUID information corresponding to the currently received ManifestID.

The table manager 1122 can generate the translated UUID information corresponding to the ManifestID based on the translated UUID information stored in the table 4124.

When the translated UUID information stored in the table 4124 has 5 characters, for example, the table manager 4123 can generate a character, which is larger than the last translated UUID information stored in the table 4124 by 1, as the translated UUID information corresponding to the currently received ManifestID information. Specifically, when the last translated UUID information is '00103', the table manager 4123 can generate '00104' as the translated UUID information corresponding to the currently received ManifestID information. Otherwise, the table manager 4123 can randomly select one of available translated UUID information items that are not currently stored in the table 4123 to generate the translated UUID information corresponding to the currently received ManifestID information.

When the translated UUID information is generated, the table manager 4123 updates the table 4124 such that information obtained by mapping the currently received ManifestID information and the generated translated UUID information is stored in the table 4124. The table manager 4123 provides the translated UUID information read from the table 4124 or the newly generated translated UUID information to the file download manager 4121.

The file download manager 4121 combines the translated UUID information provided by the UUID table manager 4123 with a device class provided by the album file parser 4122 to generate a directory name about the capture device 400.

The file download manager 4121 checks whether a directory having the generated directory name exists in the file system 413. If the directory having the directory name exists in the file system 413, the file download manager 4121 does not request the file system 413 to generate the directory having the generated directory name. When the directory having the directory name does not exist in the file system 413, the file download manager 4121 requests the file system 413 to generate the directory having the generated directory name.

When the media file corresponding to the currently received album file has not been received, the file download manager 4121 requests the capture device 400 to transmit the media file through the interface 411. When the media file corresponding to the currently received album file has been received, the file download manager 4121 sends a write function request to the file system 413 such that the received media file is stored in the directory having a name based on the album file.

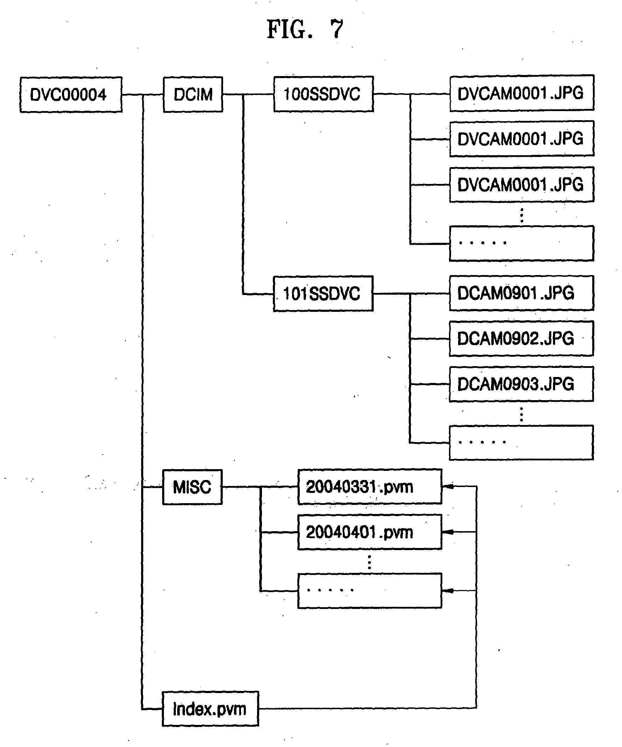

FIG. 7 illustrates the structure of a directory having the name of "DVC00004", generated in the file system 413, according to an embodiment of the present invention. The directory structure shown in FIG. 7 is identical to the file structure stored in the storage unit 403 of the capture device 400. The directory name "DVC00004" is the private directory name of the capture device 400.

The file download manager 4121 can receive a plurality of album file and media files from the capture device 400 simultaneously or non-simultaneously. However, since all received album files have the same ManifestID, the file download manager 4121 sends the write function request to the file system 413 to write the album files in a single directory having a name based on the album files. Accordingly, all of the album files and media files generated by the capture device 400 arc stored in a single directory as shown in FIG. 7. The album files and media files can be stored at different instants of time.

When the file download manager 4121 requests the file system 413 to generate a directory having an arbitrary directory name, the file system 413 generates the directory. Furthermore, when the file download manager 4121 transmits the write function request for an album file to the file system 413, the file system 413 executes the write function such that the album file is stored in a directory having a directory name included in the received write function request.

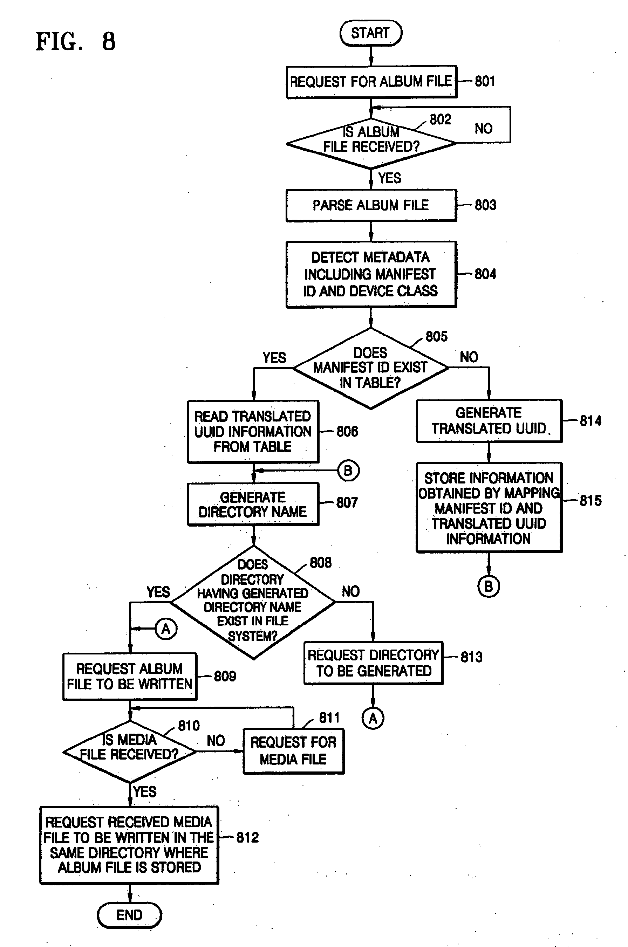

FIG. 8 is a flow chart showing a multi-media file moving method according to another embodiment of the present invention.

The storage device 410 requests the capture device 400 to transmit an album file at the user's request or when the connection between the capture device 400 and the storage device 410 is recognized in the step 801. When the album file is received from the capture device 400 in the step 802, the album file parser 4122 of the storage device 410 parses the received album file in the step 803. When the album file is parsed to detect metadata of the album file, such as a ManifestID, a device class and so on, in the step 804, the table manager 4123 checks whether the ManifestID exists in the table 4124 in the step 805.

When the ManifestID exists in the table 4124, the table manager 4123 reads translated UUID information corresponding to the ManifestID from the table 4124 in the step 806.

The file download manager 4121 combines the translated UUID information provided by the table manager 4123 and the device class information provided by the album file parser 4122 to generate a directory name for the capture device 400 in the step 807. The directory name can be generated by combining the translated UUID information, device class information and identification information about the vendor or manufacturer of the capture device 400. When the device class of the capture device 400 is 'DVC', the identification information about the capture device vendor or manufacturer is 'SS', and the translated UUID information is '412', the file download manager 4121 can generate a directory name 'DVCSS412'. The identification information about the vendor or manufacturer of the capture device 400 can be defined by free characters. The device class information is defined by upper-case alphanumeric characters.

The file download manager 4121 checks whether the directory having the generated directory name exists in the file system 413 in the step 808. When the directory having the generated directory name exists in the file system 413, the file download manager 4121 transmits an album file write function request to the file system 413 in the step 809.

The file download manager 4121 checks whether a media file corresponding to the received album file has been received in the step 810. When the media file has been received, the file download manager 4121 sends the write function request to the file system 413 such that the media file is stored in the same directory where the album file is recorded in the step 812. The directory structure of the album file and media file stored in the same directory can be identical to the directory structure shown in FIG. 7.

When the directory having the generated directory name does not exist in the file system 413 in the step 808, the file download manager 4121 requests the file system 413 to generate a directory having the directory name, which is generated in the step 807, in the step 813. Then, the process goes to the step 809 to carry out the following steps.

When the received UUID information does not exist in the table 4124 in the step 805, the table manager 4123 generates translated UUID corresponding to the received ManifestID in the step 814. The table manager 4123 stores information obtained by mapping the received ManifestID and the translated UUID information in the table 4124 in the step 815. Then, the process goes to the step 807 to carry out the following steps.

In the process shown in FIG. 8, the storage device 410 requests the capture device 400 to transmit an album file and receives the album file and media file corresponding to the album file. However, the present invention can be also applied to a case where the storage device simultaneously receives the album file and media file because the user of the storage device 410 requests the media file to be stored.

A program for executing the multi-media file moving method according to the present invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion. Also, functional programs, codes, and code segments for accomplishing the present invention can be easily construed by programmers skilled in the art tn which the present invention pertains.

According to the present invention, the class of a capture device can be recognized based on preferred embodiments of a directory name and thus a media file a. user desires can be easily searched. Furthermore, a directory name is automatically generated in a storage device using the UUID and device class of the capture device so that even a storage device to which information for generating a directory is difficult to input can easily generate a directory of a media file or an album file and media file the user wants to store. Moreover, the condition of restriction on the number of directories that can be generated according to a design rule for camera file can be satisfied because the directories are located based on the capture device.

While the present invention has been particularly shown and described with reference to exemplary embodiments thereof, it will be understood by those of ordinary skill in the art that various changes in form and details may be made therein without departing from the spirit and scope of the present invention as defined by the following claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps arc mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of moving a media file from a device having the media file to a storage device, the method comprising:
receiving unique identifier information about the device from the device;
checking whether a directory having a name based on the unique identifier information exists in the storage device;
generating the directory based on the unique identifier information if the directory docs not exist in the storage device; and
storing the media file received from the device in the directory.

2. The method as claimed in claim 1, wherein the directory is generated using further at least one of class information about the device and identification information about the vendor or manufacturer of the device.

3. The method as claimed in claim. 1, wherein the directory is generated using at least one selected from the group consisting of translated information for the unique identifier information about the device, class information about the device, and the identification information about the vender or manufacturer of the device.

4. The method as claimed in claim 3, further comprising generating a directory name based on the unique identifier information,
wherein the checking whether the directory exists in the storage device is performed using the directory name.

5. The method as claimed in claim 1, further comprising generating a directory name based on the unique identifier information,
wherein the checking whether the directory exists in the storage device is performed using the directory name.

6. A method of moving a media file from a device storing the media file to a storage device, the method camprisung:
transmitting information based on unique identifier information about the device to the storage device when the device receives a request for the unique identifier information about the device; and
transmitting the media file to the storage device when the device receives a request for the media file.

7. The method as claimed in claim 6, wherein the information based on the unique identifier information about the device includes at least one of class information about the device, the unique identifier information about the device, and identification information about the vendor or manufacturer of the device.

8. A method of moving a media file from a device storing the media file and an album file according to the MPV (MusicPhotoVideo) standard to a storage device, the method comprising:
receiving the album file from the device;
checking whether a directory having a name based on the unique identifier information about the device, the unique identifier information obtained by parsing the album file, exists in the storage device;
generating the directory based on the unique identifier information if the directory does not exist in the storage device; and
storing the media file and the album file received from the device in the directory.

9. The method as claimed in claim 8, further comprising generating a directory name based on the unique identifier information about the device and metadata of the device, the mcta data of the device also obtained by parsing the album file,
wherein the checking whether the directory exists in the storage device is performed using the directory name.

10. The method as claimed in claim 9, wherein the metadata includes at least one selected from the group consisting of class information about the device, information about the vendor or manufacturer of the device, the model number of the device, and latest device information about the album file.

11. A method of moving a media file from a. device storing the media file and an album file according to the MPV (MusicPhotoVidco) standard to a storage device, the method comprising:
reading the media file and the album file corresponding to the media file from the device when the device receives a request for the media file; and
transmitting the read-out media file and album file to the storage device.

12. The method as claimed in claim 11, wherein the album file is an index file of the media file.

13. The method as claimed in claim 11, wherein the album file includes at least one selected from the group consisting of identification information about the device, class information about the device, a model number of the device, identification information about the vendor or manufacturer of the device, and latest device information about the album file.

14. An apparatus for moving a media file from a device (100, 400) having the media file to a storage device (110, 410), the apparatus comprising:
an interface (111, 413) receiving unique identifier information about the device and the media file from the device;
a file system (113, 413) managing at least one directory of the storage device and performing a write function for the media file; and
a media file moving controller (112, 412) checking whether a directory having a name based on the unique identifier information received from the interface exists in the file system, and requesting the write function for the media file from the file system if the directory exists in the file system.

15. The apparatus as claimed in claim 14, wherein the media file moving controller (112, 412) further generates a directory name based on the unique identifier information and requests the file system to generate the directory having the generated directory name if the directory having the generated directory name does not exist in the file system.

16. The apparatus as claimed in claim 15, wherein the media file moving controller (112, 412) generates the directory name by further using at least one of class information of the device and identification information about the vendor or manufacturer of the device.

17. The apparatus as claimed in claim 15, wherein the media file moving controller (112, 412) generates the directory name using at least on.e selected from the group consisting of translated information for the unique identifier information, class information of the device, and identification information about the vender or manufacturer of the device.

18. The apparatus as claimed in any one of claims 15-17, wherein the media file moving controller (112, 412) comprises:
a table (1123, 4123) storing translated information corresponding to unique identifier information of at least one device;
a table manager (1122, 4122) obtaining the translated information from the table based on the unique identifier information of the device; and
a download manager (1121, 4121) providing the unique identifier information received from the interface to the table manager, checking whether the directory having a name based on the translated information received from the table manager exists in the file system, and requesting the file system to write the media file if the directory exists in the file system.

19. The apparatus as claimed in claim 18, wherein the download manager (1121, 4121) generates a directory name based on the translated information and class information about the device and checks whether the directory having the directory name exists in the file system.

20. The apparatus as claimed in claim 18, wherein the table manager (1122, 4122) generates the translated information corresponding to the unique identifier information about the device if the translated information does not exist in the table, and updates the transited information stored in the table using the generated translated in formation.

21. An apparatus for moving a media file from a device storing the media file and an album file according to the MPV (MusicPhotoVideo) standard to a storage device (410), the apparatus comprising:
an interface (411) receiving the media file and the album file corresponding to the media file from the device;
a file system (413) managing at least one directory of the storage device and writing the media file and the album file; and
a media file moving controller (412) checking whether a directory having a name based on the album file received from the interface exists in the file system, and requesting the file system to write the media file and the album file if the directory exists in the file system.

22. The apparatus as claimed in claim 21, wherein the album file includes at least one selected from the group consisting of identification information about the device, class information of the device, a model number of the device, identification information about the vendor or manufacturer of the device, and latest device information about the album file.

23. The apparatus as claimed in claim 22, wherein the media file moving controller (412) generates a directory name based on the album file and requests the file system to generate the directory having the directory name if the directory having the directory name does not exist in the file system.

24. The apparatus as claimed in claim 21, wherein the media file moving controller (412) comprises:
a table (4124) storing transited information corresponding to unique identifier information about at least one media device;
a table manager (4123) obtaining the translated information from the table based on the unique identifier information about the media device;
an album file parser (4122) parsing the album file; and
a file download manager (4121) providing the album file received from the interface to the album file parser, providing the unique identifier information included in a result of the parsing received from the album file parser to the table manager, checking whether the directory having a name based on the translated information received from the table manager exists in the file system and requesting the file system to write the media file and the album file if the directory exists in the file system.

25. The apparatus as claimed in claim 24, wherein the album file comprises at least one selected from the group consisting of identification information about the device, class information about the device, a model number of the device, identification information about the vendor or manufacturer of the device, and latest device information about the album file.

26. A computer readable storage medium storing a program for executing a method of moving a media filo from a device having the media file to a storage device, the media file moving method comprising:
receiving unique identifier information about the device from the device;
checking whether a directory having a name based on the unique identifier information exists in the storage device;
generating the directory based on the unique identifier information if the directory does not exist in the storage device; and
storing the media file received from the device in the directory.

27. A computer readable storage medium storing a program for executing a method of moving a media file from a device storing the media file and an album file according to the MPV (MusicPhotoVideo) standard to a storage device, the media file moving method comprising:
receiving the album file from the device;
checking whether a directory having a name based on the unique identifier information about the device, the unique identifier information obtained by parsing the album file, exists in the storage device;
generating the directory based on the unique identifier information if the directory docs not exist in the storage device; and
storing the media file and the album file received from the device in the directory.
